# EUROPÄISCHE PATENTSCHRIFT

(11) **EP 3 106 021 B1**
(45) Veröffentlichungstag und Bekanntmachung des Hinweises auf die Patenterteilung: **29.01.2020**
(21) Anmeldenummer: 16171873.9
(22) Anmeldetag: 30.05.2016
(51) Int. Cl.: A01F 15/08

(54) **RUNDBALLENPRESSE**
ROUNDBALER
PRESSE À BALLES RONDES

(30) Priorität: 16.06.2015 DE 102015210998
(43) Veröffentlichungstag der Anmeldung: 21.12.2016
(73) Patentinhaber: Deere & Company, Moline, IL 61265 (US)
(72) Erfinder: Chapon, Emmanuel, 70100 Velet (FR); Zabe, Mickael, 39350 Ougney (FR); Gresset, Pascal, 25870 Auxon Dessous (FR)
(74) Vertreter: Holst, Sönke

(56) Entgegenhaltungen:
- EP-A1- 1 969 918
- WO-A2-2014/194287
- US-A- 4 334 467

## Beschreibung

Die Erfindung betrifft eine Rundballenpresse mit einem Ballenpressraum und zum Auswerfen eines fertiggestellten Ballens in eine Öffnungsposition verbringbaren Begrenzungsmitteln des Ballenpressraums.

### Stand der Technik

Rundballenpressen finden Verwendung, um aus halmförmigem landwirtschaftlichem Erntegut Ballen herzustellen. Derartige Rundballenpressen weisen einen Ballenpressraum und zugehörige Pressmittel auf. Nach der Fertigstellung und ggf. Umwicklung eines Ballens mit Netz, Garn oder einer Folie wird dieser nach hinten aus dem Ballenpressraum ausgeworfen, nachdem eine rückwärtige Tür geöffnet wurde oder ein Ballenpresselemente haltender Schwenkteil nach oben geschwenkt wurde, um dem Ballen den Weg zu öffnen.

Der Ballen hat beim Verlassen des Ballenpressraums einerseits noch vom Ballenbildungs- und ggf. Umwicklungsprozess eine nicht unbeträchtliche Rotationsenergie und gewinnt andererseits beim Ausrollen aus dem Ballenpressraum noch an kinetischer Energie dazu, wenn er eine rückwärtige Abladerampe der Rundballenpresse herunterrollt. Diese Bewegungsenergie kann dazu führen, dass der Ballen auf dem Erdboden unerwünscht weit rollt. Außerdem prallt er mit recht hoher Geschwindigkeit auf die Abladerampe auf, wodurch Beschädigungen des Umwicklungsmaterials auftreten können. Die Abladerampe ist daher im Stand der Technik in recht aufwändiger Weise hinreichend flexibel zu gestalten, um dieses Problem zu vermeiden.

Im Stand der Technik (DE 103 39 652 A1) wurde vorgeschlagen, an der Rückseite des Ballenpressraums der Rundballenpresse eine Tür anzubringen, die um eine vertikale oder etwa vertikale Schwenkachse schwenkbar ist und als Rückhaltevorrichtung für den Ballen dient, indem sie mit ihrer Stirnseite mit dem ausgeworfenen Ballen in Berührung kommt und ihn abbremst. Eine derartige Tür bedeutet jedoch ebenfalls einen zusätzlichen Aufwand und kann die Geschwindigkeit, mit welcher der Ballen auf die Abladerampe gelangt, nicht beeinflussen, da der Ballen erst später in Anlage an die Tür kommt.

Es sind weiterhin Rundballenpressen mit in seitlicher Richtung beweglichen Seitenwänden oder Seitenwandteilen beschrieben worden, die während der Erzeugung eines Ballens in eine innere Position verbracht und zum Auswerfen des Ballens nach außen verfahren werden, um die Reibungskräfte des Ballens während des Auswerfens zu vermindern. Hierzu sei auf die US 4 334 467 A, DE 39 20 377 A1, DE 10 2005 036 181 A1, EP 1 264 531 A1, EP 1 364 574 A1 und EP 1 396 187 A2 verwiesen. Beim Ausrollen des Ballens ist die von den Seitenwänden auf den Ballen ausgeübte Kraft somit auf einen relativ kleinen Wert vermindert, was nicht zu einer nennenswerten Bremsung des Ballens beim Ausrollen führt und das erwähnte Problem nicht löst.

Gemäß der DE 10 2007 012 174 A1 wird die Seitenwand beim Entladevorgang in eine Position verstellt, bei der sich eine vorgegebene, sensorisch erfasste Reibung ergibt. Hier ist ein größerer Aufwand für die Regelung einschließlich eines zugehörigen Aktors zur Verstellung der Seitenwand erforderlich. Die Verstellung soll einen Austritt des Ballens sicherstellen, sodass auch hier nicht von einer nennenswerten Bremswirkung ausgegangen werden kann.

### Aufgabe

Das der Erfindung zugrunde liegende Problem wird darin gesehen, eine Rundballenpresse bereitzustellen, bei der die oben erwähnten Nachteile nicht oder in einem verminderten Maß vorliegen.

### Lösung

Die vorliegende Erfindung wird durch die Patentansprüche definiert.

Eine Rundballenpresse ist mit einem Ballenpressraum und Begrenzungsmitteln des Ballenpressraums ausgestattet, die zum Auswerfen eines fertiggestellten Ballens in eine Öffnungsposition verbringbar sind. Die axiale Abmessung des Ballenpressraums ist durch wenigstens eine mittels eines Verstelltriebs verstellbare Seitenwand veränderbar. Der Verstelltrieb ist derart konfiguriert, dass die axiale Abmessung des Ballenpressraums während des Auswerfens des Ballens gegenüber der beim Erzeugen des Ballens vorgesehenen Abmessung zunächst vergrößert und anschließend (noch während des Auswerfens des Ballens) wieder vermindert wird.

Auf diese Weise erreicht man, dass die Klemmkraft der Seitenwand auf den Ballen während des Auswerfens zunächst gegenüber der Klemmkraft beim Erzeugen des Ballens vermindert und dann wieder vergrößert wird. Somit kann der Ballen zunächst ohne größere Bremsung seine Ausrollbewegung aus dem Ballenpressraum beginnen, ohne im Ballenpressraum stecken zu bleiben, und er wird anschließend durch die Seitenwand abgebremst. Dadurch ist eine Beschädigung des Wickelmaterials beim Herunterrollen der Abladerampe nicht mehr oder in vermindertem Maße zu befürchten, was es ermöglicht, die Abladerampe einfacher als bisher zu gestalten. Außerdem rollt der Ballen nicht mehr allzu weit von der Rundballenpresse fort.

Der Verstellantrieb kann mit den Begrenzungsmitteln gekoppelt sein, d.h. durch diese gesteuert werden, sodass die Position der Seitenwand von der Position der Begrenzungsmittel abhängt, die wiederum die Position des Ballens vorgeben. Es wäre jedoch auch denkbar, den Verstellantrieb direkt abhängig von der mittels eines Sensors erfassten Position des Ballens zu kontrollieren.

Die Kopplung zwischen den Begrenzungsmitteln und dem Verstelltrieb kann auf beliebige Weise erfolgen, z.B. durch eine mechanische Kopplung, wie sie im Folgenden beschrieben wird, oder durch eine elektronische Kopplung zwischen einem Aktor zur Verstellung der Begrenzungsmittel einerseits und einem Aktor zur Betätigung des Verstelltriebs andererseits, analog zu DE 10 2007 012 174 A1. In diesem Fall kann der Aktor den Verstelltrieb derart steuern, dass die Seitenwand eine von der Position der Begrenzungsmittel abhängige Position einnimmt oder eine davon abhängige, sensorisch erfasste Reibungskraft auf den Ballen ausübt.

Insbesondere können die Begrenzungsmittel einen Schwenkteil umfassen, welcher Mittel zur Bildung eines Ballens im Ballenpressraum trägt und zwischen einer Ballenbildungsposition und einer Ballenauswurfposition drehbeweglich ist. Bei einer anderen Ausführungsform können die Begrenzungsmittel auch als Tür (vgl. US 4 334 467 A1) ausgeführt sein.

Der Schwenkteil ist vorzugsweise im Abstand von seiner Drehachse mit einem Steuerelement verbunden, das mit einer doppelkeilförmigen Steuerfläche der Seitenwand zusammenwirkt. Es können auch mehrere Steuerelemente und Steuerflächen vorhanden sein, die in unterschiedlichen Abständen von der Drehachse des Schwenkteils angeordnet sind.

### Ausführungsbeispiel

In den Zeichnungen ist ein nachfolgend näher beschriebenes Ausführungsbeispiel der Erfindung dargestellt. Es zeigt:
- Fig. 1: eine erfindungsgemäße Rundballenpresse in Seitenansicht in einer geschlossenen Stellung und schematischer Darstellung,
- Fig. 2: die Rundballenpresse nach Figur 1 in einer Ansicht von hinten und in schematischer Darstellung und
- Fig. 3: eine vergrößerte Darstellung des inneren Verstelltriebs 32.

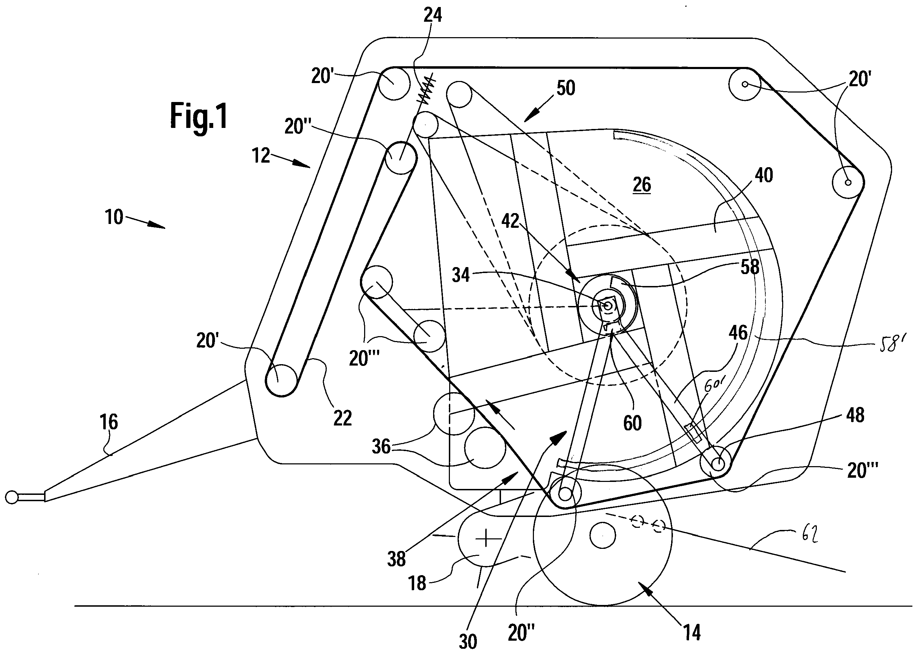

Eine in der Figur 1 gezeigte Rundballenpresse 10 enthält einen Rahmen 12, ein Fahrgestell 14, eine Deichsel 16, eine Aufnahmevorrichtung 18, Rollen 20, Presselemente 22, eine Spannvorrichtung 24, Seitenwände 26, einen Ballenpressraum 28, Schwenkteile 30 und einen Verstelltrieb 32.

Die Rundballenpresse 10 ist in dem dargestellten Ausführungsbeispiel mit einem in der Größe veränderbaren Ballenpressraum 28 versehen, kann aber auch mit einem größenunveränderlichen Ballenpressraum 28 versehen werden. In dem Ballenpressraum 28 wird vom Boden aufgenommenes Erntegut zu einem sogenannten Rundballen geformt, der mit seinen Stirnseiten auf die Seitenwände 26 drückt.

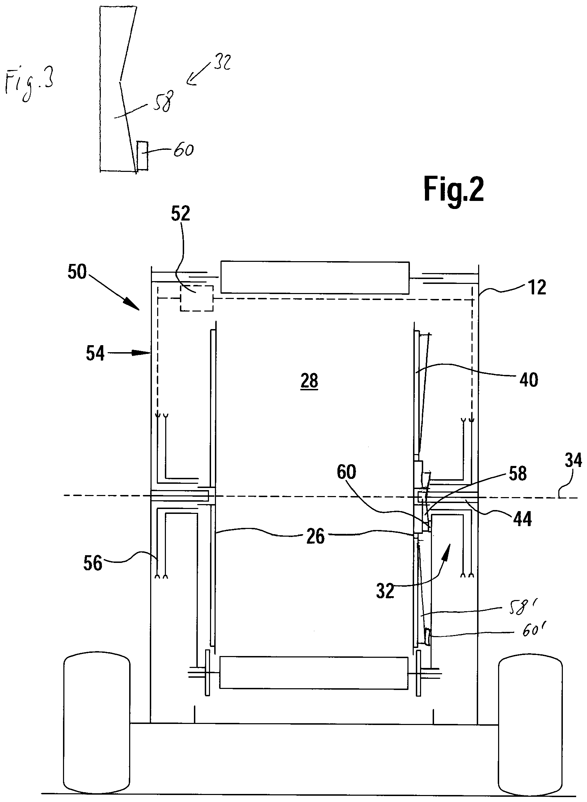

Der Rahmen 12 ist insbesondere in Figur 2 gut zu erkennen und stellt sich als ein Schweiß- und/oder Schraubzusammenbau dar, an dem alle Komponenten der Rundballenpresse 10 befestigt sind, der sich auf dem Fahrgestell 14 abstützt und der mit der Deichsel 16 an ein nicht gezeigtes Zugfahrzeug anschließbar ist. Der Rahmen 12 trägt unter anderem nicht dargestellte Verkleidungsteile, einige der Rollen 20, die Seitenwände 26 und die Schwenkteile 30. Der Rahmen 12 umschließt den von den Seitenwänden 26 und den Presselementen 22 umgebenen Bereich weiträumig.

Das Fahrgestell 14 besteht in nicht näher bezeichneter Weise aus einer Achse und Rädern, auf denen der Rahmen 12 ruht. Die Deichsel 16 greift an der Vorderseite des Rahmens 12 starr oder höhenverstellbar an. Die Aufnahmevorrichtung 18 ist in üblicher Weise als eine so genannte Pick-up ausgebildet und an den Rahmen 12 höhenverstellbar angeschlossen. Der Aufnahmevorrichtung 18 kann eine ebenfalls an sich bekannte Schneidvorrichtung nachgeordnet werden. Die Aufnahmevorrichtung 18 nimmt auf dem Boden abgelegtes Gut auf und gibt es über eine gegebenenfalls vorhandene Schneidvorrichtung in den Ballenpressraum 28 weiter, wo es zu einem zylindrischen Rundballen geformt wird.

Einige der Rollen 20 sind ortsfest in dem Rahmen 12 drehbar gelagert und werden mit 20' bezeichnet, eine andere der Rollen 20 ist gegen die Kraft einer nicht näher bezeichneten Feder verstellbar, damit die Presselemente 22 dem wachsenden Ballendurchmesser nachgeben können, und mit 20" bezeichnet; wieder andere Rollen 20 sind auf Schwenkteilen 30 um eine Schwenkachse 34 schwenkbar. Diese Rollen 20 werden mit 20''' gekennzeichnet und sind derart breit ausgebildet, verlaufen zueinander parallel und sind so angeordnet, dass die Presselemente 22 darüber ablaufen und den Ballenpressraum 28 umschließen können. Neben den Rollen 20 sind auch Walzen 36 vorgesehen, die sich oberhalb einer Eingangsöffnung 38 in den Ballenpressraum 28 befinden, als sogenannte Starterrollen beim Ballenbildungsbeginn funktionieren und auf denen sich ein Teil des Gewichts des Rundballens abstützen kann.

Die Presselemente 22 sind als parallel zueinander verlaufende Riemen ausgebildet, die den Ballenpressraum 28 auf seiner Breite im Wesentlichen bedecken. Statt der Ausbildung als Riemen könnte auch eine als Stabkettenförderer oder als breites Band gewählt werden, wie dies ebenfalls bekannt ist; in diesem Fall wäre also nur ein Presselement vorhanden, was aber ebenfalls unter den Schutzbereich fallen soll. Die Presselemente 22 sind endlos und werden dadurch in Umlaufbewegung versetzt, dass sie reibschlüssig auf wenigstens einer antreibbaren Rolle 20 aufliegen. Die Presselemente 22 bilden im Bereich der Eingangsöffnung 38 eine Brücke, die sich mit zunehmendem Erntegut zu einer nach innen ausweitenden Schlaufe formt und den Rundballen umgibt. Die Presselemente 22 werden dadurch unter Spannung gehalten, dass sie über die lageveränderliche Rolle 20' geführt werden.

Die Spannvorrichtung 24 wird in bekannter Weise dadurch gebildet, dass die Rolle 20' auf einem nicht dargestellten Arm, Schlitten oder dergleichen gegen die Kraft der Feder geführt ist und stets eine Schlaufe der Presselemente 22 gespannt hält.

Die Seitenwände 26 nehmen im Wesentlichen in einer Ansicht auf Figur 1 die Form eines "D" ein, wobei der rückwärtige und in Figur 1 rechte Endbereich einen Bogen bildet, der im Wesentlichen der Umfangslinie des fertigen Rundballens folgt, d. h. auf einem Teil eines runden Kreisbogens. Die Seitenwände 26 sind grundsätzlich einstückig ausgebildet, d.h. sie sind nicht wie bei herkömmlichen Rundballenpressen entlang einer etwa mittigen vertikalen Ebene geteilt; sie können aber durchaus aus mehreren Teilen zusammengesetzt werden. Aus Figur 2 geht hervor, dass die Seitenwände 26 einen nicht unbeträchtlichen Abstand zu dem Rahmen 12 einnehmen und somit nach außen ausgelenkt werden können, wie dies nachfolgend beschrieben wird. Die Seitenwände 26 sind mittels Versteifungsstreben 40 biegesteif ausgebildet, wobei die Versteifungsstreben 40 aufgeschraubt oder aufgeschweißt werden können. Gemäß der Darstellung in Figur 2 verlaufen die Versteifungsstreben 40 nahezu sternförmig mit Bezug auf die Schwenkachse 34 und verlaufen tangential an dieser mit geringem Abstand vorbei, um schließlich mehr oder weniger senkrecht aufeinander zu stoßen. Aufgrund dieses Verlaufs schließen sie eine in diesem Ausführungsbeispiel viereckige Kammer 42 ein. In ihrem vorderen Endbereich sind die Seitenwände 26 mit dem Rahmen 12 im Wesentlichen fest verbunden; allerdings ist eine geringe Schwenkbewegung ausgehend von einer Lage gemäß Figur 2 um wenige Grade nach außen dadurch möglich, dass entweder die Seitenwände 26 im Anschlussbereich z. B. aus einem nachgiebigen Blech gebildet sind, oder in einer nachgiebigen Verbindung, z. B. an einem nachgiebigen Flansch oder an federbelasteten Schrauben festgelegt sind. Der Anschluss der Seitenwände 26 an dem Rahmen 12 erfolgt um wesentlichen entlang einer mehr oder weniger vertikalen Linie am vorderen Ende des Ballenpressraums 28. Im Bereich der Schwenkachse 34 ist jede Seitenwand 26 auf einer Achse 44 geführt, die an dem Rahmen 12 starr befestigt ist und zugleich als Schwenkachse für die Schwenkteile 30 dient.

Der Ballenpressraum 28 ist in seiner Größe veränderlich und wird am Anfang, d. h. bei leerem Ballenpressraum 28, von einem ungefähr dreieckigen zylindrischen Raum zwischen der Aufnahmevorrichtung 18 und dem Pressmittel 22 und seitlich von den Seitenwänden 26 begrenzt. Mit zunehmend zugeführtem Erntegut erweitert sich der Ballenpressraum 28 und nimmt schließlich einen Querschnitt ein, der im rückwärtigen Bereich der Form der Seitenwände 26 folgt.

Die Schwenkteile 30 sind in diesem Ausführungsbeispiel auf jeder Seite mit einem oder mehreren radial zu der Schwenkachse 34 verlaufenden Arm(en) 46 und einer oder mehreren an dessen/deren radial außen liegenden Ende angebrachten quer dazu verlaufenden Traverse(n) 48 versehen. Am Ende jeder Traverse 48 ist jeweils eine Rolle 20'" vorgesehen. Die Schwenkteile 30 sind mit dem radial innenliegenden Ende jedes Arms 46 schwenkbar auf der Achse 44 angeordnet. Die Stellung der Arme 46 wird mittels eines Antriebs 50 gesteuert, der einen Motor 52 und pro Schwenkteil 30 ein Zugmittelgetriebe 54 oder einen sonstigen Schwenkantrieb enthält. Der Motor 52 kann in seinen jeweiligen Stellungen gebremst werden und hält die Arme 46 entsprechend ortsfest. Den jeweiligen Zugmittelgetrieben 54 zugehörige Abtriebsräder 56 sind konzentrisch zueinander und zu der Achse 44 gelagert und drehfest mit jeweils einem Schwenkteil 30 verbunden. Die Steuerung der Schwenkteile 30 erfolgt derart, dass der vordere Schwenkteil 30 während der Ballenbildungsphase verstellt wird, um bei der Bildung eines Ballenkerns zu helfen, und dass der rückwärtige Schwenkteil 30 eine untere Lage einnimmt, während der Rundballen gebildet wird, und eine oberen Lage, wenn er ausgeworfen wird. Der rückwärtige Schwenkteil 30 dient somit als zum Auswerfen eines fertiggestellten Ballens in eine Öffnungsposition verbringbares Begrenzungsmittel des Ballenpressraums 28. Die untere Endlage des rückwärtigen Schwenkteils 30 ist in der Figur 1 dargestellt, während er in seiner oberen Endlage um ca. 180° nach oben verschwenkt ist. Es wird darauf hingewiesen, dass der vordere Schwenkteil 30 nicht unbedingt erforderlich ist oder starr mit dem hinteren Schwenkteil 30 verbunden werden könnte.

Der Verstelltrieb 32 enthält eine ansteigende und anschließend wieder absinkende (d.h. doppelkeilförmige) Steuerfläche 58 und ein Steuerelement 60 (vgl. die Figur 3) und dient dazu, zum und beim Auswerfen des Rundballens den Druck und damit die Reibung der Seitenwände 26 auf dessen Stirnflächen zunächst zu verringern, so dass der Rundballen leichter aus dem Ballenpressraum 28 entladen werden kann, und dann wieder zu vergrößern, um ihn abzubremsen.

Die Steuerfläche 58 ist auf einem zu der Schwenkachse 34 konzentrisch verlaufenden Kreisbogen gelegen und an der Außenseite beider Seitenwände 26 befestigt, wenn es auch ausreichend wäre, nur eine ansteigende Fläche, d. h. an einer Seitenwand 26 vorzusehen. In dem vorliegenden Ausführungsbeispiel ist die Steuerfläche 58 aus einem gebogenen Stahldoppelkeil gebildet, der gleichmäßig sinkend und ansteigend innerhalb der Kammer 42 auf die Seitenwände 26 aufgeschraubt ist.

Eine weitere Steuerfläche 58' ist weiter außen auf einem größeren Kreisbogen gelegen und an der Außenseite beider Seitenwände 26 befestigt, wenn es auch ausreichend wäre, nur eine ansteigende Fläche, d. h. an einer Seitenwand 26 vorzusehen. In dem vorliegenden Ausführungsbeispiel ist die weitere Steuerfläche 58' aus einem gebogenen Stahldoppelkeil gebildet, der gleichmäßig sinkend und ansteigend innerhalb der Kammer 42 auf die Seitenwände 26 aufgeschraubt ist.

Das mit der Steuerfläche 58 zusammenwirkende Steuerelement 60 ist auf der der Längsmittenebene der Rundballenpresse 10 zugelegenen Seite des Arms 46 des rückwärtigen Schwenkteils 30 vorgesehen und als Gleitfläche ausgebildet. Zur Minimierung der Reibung werden die Reibflächen geschmiert; alternativ kann das Steuerelement 60 auch als Rad, Rolle, Kugel oder dergleichen drehendes Glied ausgebildet werden. Das Steuerelement 60 ist derart angeordnet, dass es bei einer Drehung des Schwenkteils 30 um die Schwenkachse 34 eine runde Kreisbahn beschreibt und sich auf der Steuerfläche 58 bewegt. Vorzugsweisen befindet sich das Steuerelement 60 stets in Anlage auf der Steuerfläche 58.

Ein mit der weiteren Steuerfläche 58' zusammenwirkendes Steuerelement 60' ist auf der der Längsmittenebene der Rundballenpresse 10 zugelegenen Seite des Arms 46 des rückwärtigen Schwenkteils 30 in der Nähe von dessen radial äußerem Ende vorgesehen und als Gleitfläche ausgebildet. Zur Minimierung der Reibung werden die Reibflächen geschmiert; alternativ kann das Steuerelement 60 auch als Rad, Rolle, Kugel oder dergleichen drehendes Glied ausgebildet werden. Das weitere Steuerelement 60 ist derart angeordnet, dass es bei einer Drehung des Schwenkteils 30 um die Schwenkachse 34 eine runde Kreisbahn beschreibt und sich auf der weiteren Steuerfläche 58' bewegt. Vorzugsweisen befindet sich das Steuerelement 60 stets in Anlage auf der weiteren Steuerfläche 58'.

Die Steuerelemente 60, 60' liegen auf der höchsten Erhebung der Steuerflächen 58, 58' auf, wenn sich die rückwärtigen Schwenkteile 30 in ihrer unteren Endstellung befinden - vgl. Figur 1 - und der Rundballen erzeugt werden kann. Wenn die Schwenkteile 30 in ihre mittige Stellung gebracht werden, in der der Rundballen seine Bewegung aus dem Ballenpressraum 28 beginnt, werden die Steuerelement 60, 60' zu der niedrigsten Stelle der Steuerflächen 58, 58' bewegt. Wenn die Schwenkteile 30 in ihre obere Stellung gebracht werden, in der der Rundballen seine Bewegung aus dem Ballenpressraum 28 fortsetzt und den Ballenpressraum 28 verlässt, werden die Steuerelemente 60, 60' zu einer wieder höheren Stelle der ansteigenden Steuerflächen 58, 58' bewegt, deren Höhe mit der unteren Schwenkstellung übereinstimmen oder etwas kleiner oder sogar größer sein kann, um den Ballen abzubremsen, bevor dieser eine Abladerampe 62 erreicht.

Sobald in dem Ballenpressraum 28 ein Rundballen gebildet ist, wird der rückwärtige Schwenkteil 30 angehoben, worauf sich aufgrund des in dem Ballenpressraum 28 herrschenden Drucks ausgehend von dem gepressten Erntegut die Seitenwände 26 nach außen bewegen. Infolgedessen verringert sich die Reibung zwischen der Innenseite der Seitenwände 26 und den Stirnflächen des Rundballens und letzterer beginnt aufgrund der Schwerkraft in Richtung auf die Abladerampe 62 hin aus dem Ballenpressraum 28 herauszurollen. Kurz danach werden die Seitenwände 26 wieder zusammengeführt und der Ballen abgebremst, bevor dieser die Abladerampe 62 erreicht. Sobald der Rundballen den Ballenpressraum 28 komplett verlassen hat und die Rundballenpresse 10 soweit weiterbewegt worden ist, dass der rückwärtige Schwenkteil 30 wieder abgesenkt werden kann, erfolgt eine Schwenkbewegung des rückwärtigen Schwenkteils 30 in der entgegensetzten Richtung, so dass die Steuerelement 60', 60' zur kleinsten und schließlich zur größten Erhebung der ansteigenden Flächen 58, 58 bewegt werden und dabei die Seitenwände 26 nach außen und dann nach innen drückt und ein neuer Ballen erstellt werden kann.

## Patentansprüche

1. Rundballenpresse (10) mit einem Ballenpressraum (28) und zum Auswerfen eines fertiggestellten Ballens in eine Öffnungsposition verbringbaren Begrenzungsmitteln des Ballenpressraums (28), wobei:
die axiale Abmessung des Ballenpressraums (28) durch wenigstens eine mittels eines Verstelltriebs (32) verstellbare Seitenwand (26) veränderbar ist,
und der Verstelltrieb (32) derart konfiguriert ist, dass die axiale Abmessung des Ballenpressraums (28) während des Auswerfens des Ballens gegenüber der beim Erzeugen des Ballens vorgesehenen Abmessung zunächst vergrößert wird,
**dadurch gekennzeichnet, dass** der Verstelltrieb (32) derart konfiguriert ist, dass die axiale Abmessung des Ballenpressraums (28) anschließend an das Vergrößern noch während des Auswerfens wieder vermindert wird, bevor der Ballen eine Abladerampe (62) erreicht.

2. Rundballenpresse (10) nach Anspruch 1, wobei der Verstellantrieb (32) mit den Begrenzungsmitteln gekoppelt ist.

3. Rundballenpresse (10) nach Anspruch 2, wobei die Begrenzungsmittel einen Schwenkteil (30) umfassen, welcher Mittel zur Bildung eines Ballens im Ballenpressraum (28) trägt und zwischen einer Ballenbildungsposition und einer Ballenauswurfposition drehbeweglich ist.

4. Rundballenpresse (10) nach Anspruch 3, wobei der Schwenkteil (30) im Abstand von seiner Drehachse (34) mit einem Steuerelement (60, 60') verbunden ist, das mit einer doppelkeilförmigen Steuerfläche (58, 58') der Seitenwand (28) zusammenwirkt.

5. Rundballenpresse (10) nach Anspruch 4, wobei mehrere Steuerelemente (60, 60') und Steuerflächen (58, 58') vorhanden sind, die in unterschiedlichen Abständen von der Drehachse (34) des Schwenkteils (30) angeordnet sind.

## Claims

1. Roundbaler (10) having a bale-pressing chamber (28) and intended for ejecting a finished bale into boundary means of the bale-pressing chamber (28) that can be brought into an opening position, wherein:
the axial dimension of the bale-pressing chamber (28) can be varied by at least one side wall (26) which can be adjusted by means of an adjusting drive (32),
and the adjusting device (32) is configured in such a way that the axial dimension of the bale-pressing chamber (28) during the ejection of the bale is first of all increased in relation to the dimension provided during the production of the bale,
**characterized in that** the adjusting drive (32) is configured in such a way that the axial dimension of the bale-pressing chamber (28), subsequent to being increased, is reduced again still during the ejection before the bale reaches an unloading ramp (62) .

2. Roundbaler (10) according to Claim 1, wherein the adjusting drive (32) is coupled to the boundary means.

3. Roundbaler (10) according to Claim 2, wherein the boundary means comprise a pivoting part (30) which bears means for forming a bale in the bale-pressing chamber (28) and which is rotatable between a bale-forming position and a bale-ejecting position.

4. Roundbaler (10) according to Claim 3, wherein the pivoting part (30) is connected at a distance from its axis of rotation (34) to a control element (60, 60') which interacts with a double wedge-shaped control surface (58, 58') of the side wall (28) .

5. Roundbaler (10) according to Claim 4, wherein a plurality of control elements (60, 60') and control surfaces (58, 58') are present which are arranged at different distances from the axis of rotation (34) of the pivoting part (30).

## Revendications

1. Presse à balles rondes (10) comprenant une chambre de pressage de balle (28) et des moyens de limitation de la chambre de pressage de balle (28) qui peuvent passer dans une position d'ouverture pour éjecter une balle produite :
la dimension axiale de la chambre de pressage de balle (28) pouvant être modifiée par au moins une paroi latérale (26) qui peut être réglée au moyen d'un entraînement de réglage (32),
et l'entraînement de réglage (32) étant conçu pour augmenter tout d'abord la dimension axiale de la chambre de pressage de balle (28) lors de l'éjection de la balle par rapport à la dimension prévue lors de la production de la balle,
**caractérisée en ce que** l'entraînement de réglage (32) est conçu de telle sorte que, après l'augmentation, la dimension axiale de la chambre de pressage de balle (28) diminue à nouveau également lors de l'éjection avant que la balle n'atteigne une rampe de déchargement (62).

2. Presse à balles rondes (10) selon la revendication 1, l'entraînement de réglage (32) étant accouplé aux moyens de limitation.

3. Presse à balles rondes (10) selon la revendication 2, les moyens de limitation comprenant une partie pivotante (30) qui porte des moyens destinés à former une balle dans la chambre de pressage de balle (28) et qui est mobile en rotation entre une position de formation de balle et une position d'éjection de balle.

4. Presse à balles rondes (10) selon la revendication 3, la partie pivotante (30) étant reliée, à distance de son axe de rotation (34), à un élément de commande (60, 60') qui coopère avec une surface de commande (58, 58'), en forme de double coin, de la paroi latérale (28).

5. Presse à balles rondes (10) selon la revendication 4, **caractérisée en ce qu'**une pluralité d'éléments de commande (60, 60') et de surfaces de commande (58, 58') sont prévus, lesquels sont disposés à différentes distances de l'axe de rotation (34) de la partie pivotante (30).
